# EUROPÄISCHE PATENTSCHRIFT

(11) **EP 1 450 069 B1**
(45) Veröffentlichungstag und Bekanntmachung des Hinweises auf die Patenterteilung: **14.09.2011**
(21) Anmeldenummer: 03003736.0
(22) Anmeldetag: 19.02.2003
(51) Int. Cl.: F16G 13/16, H02G 11/00

(54) **Kettenglied für eine Energieführungskette**
Chain link for energy supply chain
Maillon pour chaîne de transport d'énergie

(43) Veröffentlichungstag der Anmeldung: 25.08.2004
(73) Patentinhaber: Murrplastik System-Technik GmbH, 71570 Oppenweiler (DE)
(72) Erfinder: Funk, Rainer, 71543 Wüstenrot (DE); Jostmeier, Helmut, 74420 Oberrot (DE)
(74) Vertreter: Jeck, Anton

(56) Entgegenhaltungen:
- DE-A- 3 709 953
- DE-A- 10 036 470
- DE-A- 10 222 649
- DE-A- 19 709 894
- DE-A- 19 852 131
- DE-A- 19 852 913
- DE-U- 29 904 796
- DE-U- 29 921 667

## Beschreibung

Die Erfindung betrifft ein Kettenglied für eine Energieführungskette gemäß dem Oberbegriff des Anspruchs 1.

Bei bekannten Kettengliedern der eingangs genannten Art wird gegebenenfalls nach dem Einsetzen von Trennstegen und nach dem Einlegen der Energieführungsleitungen mindestens zumindest ein oberer Quersteg mittels sinnvoller Rastmittel in die Seitenlaschen des Kettenglieds eingeklinkt. Für kleinere Energieführungsketten sind die hierfür vorgesehenen Rastmittel zu aufwändig. Ferner ist das Öffnen und Schließen der Querstege bei einem Leitungstausch und das Einsetzen der Trennstege zeitaufwändig.

Durch die DE 197 09 894 A1 ist ein einstückiges Kettenglied für eine Energieführungskette aus Kunststoff bekannt, mit zwei gegenüberliegenden Seitenlaschen, einem die beiden Seitenlaschen miteinander verbindenden Quersteg, Überbrückungsmitteln zur Überbrückung der dem unteren Quersteg gegenüberliegenden Öffnung des Kettenglieds und mit mindestens einem am unteren Quersteg angeformten Trennsteg. Der Trennsteg und die Überbrückungsmittel sind als ein an den Quersteg angeformtes Torsionselement mit einem sich an den Quersteg anschließenden Fuß und einem sich oberseitig von dem Fuß abstrebenden Arm ausgebildet. Der Arm erstreckt sich in einer spannungsfreien Grundstellung des Torsionselements quer zur Kettenlängsrichtung und sichert so mindestens eine in der Kette geführte Energieführungsleitung gegen Herausfallen. Der Arm ist durch Tordierung des elastisch verformbaren Fußes so weit in Kettenlängsrichtung drehbar, so dass die Energieführungsleitungen eingelegt und entnommen werden können.

Durch die DE 198 52 913 A1 ist ein Kettenglied für eine Energieführungskette aus Kunststoff bekannt, mit zwei gegenüberliegenden Seitenlaschen, einem die beiden Seitenlaschen miteinander verbindenden Quersteg, Überbrückungsmitteln zur Überbrückung der dem unteren Quersteg gegenüberliegenden Öffnung des Kettenglieds und mit mindestens einem am unteren Quersteg befestigbaren Trennsteg. Die Überbrückungsmittel umfassen einen die beiden Seitenlaschen miteinander verbindenden oberen Quersteg. Mindestens der obere oder der untere Quersteg weisen eine in Kettengliedquerrichtung verlaufende Nut mit einer Nutzahnung auf. Der Trennsteg weist mindestens einen mit der Nutzahnung in Eingriff bringbaren Trennstegzahn auf. Der Trennsteg ist in einer Rasterstellung, in der sein Trennstegzahn mit der Nutzahnung in Eingriff steht, oder in einer Freistellung, in der sein Trennstegzahn mit der Nutzahnung außer Eingriff steht positionierbar.

Die Aufgabe der Erfindung besteht darin, ein Kettenglied der im Oberbegriff des Anspruchs 1 genannten Art zu schaffen, mit dem der Materialaufwand für das Kettenglied und der Zeitaufwand bei der Handhabung des Kettenglieds gering gehalten werden.

Diese Aufgabe wird mit den Merkmalen des Anspruchs 1 gelöst.

Man erkennt, dass die Erfindung ebenfalls danach verwirklicht ist, wenn das vorzugsweise als Regal ausgebildete und zwischen die beiden Laschen und den unteren Steg des Kettengliedes einbringbare Bauteil den Innenraum des Kettengliedes in mindestens zwei separate Räume für die aufzunehmenden Kabel bzw. Leitungen aufteilt. Dabei ist das regelmäßig aus Kunststoff bestehende Bauteil ein oder mehrteilig und wird mit den beiden Seitenlaschen sowie dem unteren Steg durch Rastmittel betriebsgemäß verbunden. Das Kettenglied kann als einteiliges Formstück, also Materialeinheitlich, sein, aber auch dreiteilig, indem die separat hergestellten zwei Seitenlaschen und der untere Quersteg fest miteinander verbunden werden. Das Bauteil besteht regelmäßig aus einem Material einheitlichen Einsatzstück, das gegebenenfalls mit einem Zwischenquersteg versehen ist und als Funktionseinheint zwischen die beiden Seitenlaschen und den unteren Quersteg angeordnet und mit diesem betriebsgemäß, z. B. Verrastung, verbunden und Ein derartiges Regal macht es möglich, die Kabel zunächst in dem Regal unter zu bringen und sodann die Regale in die Kettenglieder anzuordnen.

Anstelle eines oberen Querstegs und eines oder mehrerer getrennter Trennstege wird somit deren Funktion durch ein einziges Bauteil übernommen. Dieses Bauteil aus mindestens einem Trennsteg und querstegähnlichen Überbrückungsmitteln kann auf einfache Weise vom unteren Quersteg gelöst werden, dann können Energieführungsleitungen in das Kettenglied eingesetzt werden, und dann kann dieses Bauteil auf einfache Weise wieder am unteren Quersteg befestigt werden. Dabei können die Überbrückungsmittel beispielsweise derart ausgebildet sein, dass sie auf den Seitenlaschen aufliegen oder in Führungen der Seitenlaschen angeordnet sind.

Gemäß einer weiteren Ausbildung sind die Überbrückungsmittel vorzugsweise jedoch durch nahe an die Seitenlaschen reichende Querstreifen gebildet, wobei die Spalte zwischen den Seitenlaschen und den Querstreifen derart gewählt sind, dass die eingelegten Energieleitungen nicht durchfallen. Damit kann eine weitere Materialersparnis erzielt werden.

Gemäß einer weiteren Ausbildung weist der Trennsteg einen Fuß auf, der in Kettengliedquerrichtung wesentlich breiter als die Stärke des Trennstegs und mit zwei die Kanten des unteren Querstegs umklammernden Klammerleisten versehen ist. Dadurch werden eine stabile Befestigung des Bauteils am unteren Quersteg und eine einfache Montage und Demontage des Bauteils erreicht.

Eine weitere Ausbildung ist so getroffen, dass der untere Quersteg auf der dem Inneren des Kettenglieds zugewandten Seite eine Zahnung aufweist und dass der Fuß des Trennstegs mit einer in die Zahnung passenden Gegenzahnung versehen ist. Auf diese Weise kann das Bauteil bei seinem Einsetzen in Kettengliedquerrichtung arretiert werden.

Ein alternatives Kettenglied mit einem alternativen Bauteil ist gemäß der Erfindung derart ausgebildet, dass das Bauteil durch einen mit dem Fuß des Trennstegs einstückig verbundenen, U-förmigen Rahmen gebildet ist, dessen Basis auf dem unteren Quersteg aufliegt und dessen Rahmenschenkel an den Seitenlaschen anliegen, und dass die freien Enden der Rahmenschenkel Rastmittel tragen, die in in der Nähe der oberen Längsseitenkanten der Seitenlaschen angeordnete Rastausnehmungen einrasten. Durch diese weitere Ausbildung der Erfindung wird das Einlegen der Energieleitungen in die Energieführungskette erleichtert, weil diese Leitungen zunächst mit den Bauteilen bestückt und dann die Bauteile in die Kettenglieder eingesetzt werden können.

Gemäß einer weiteren Ausbildung der Erfindung sind an den Längskanten der Basis Längsstege derart angeordnet, dass der untere Quersteg U-förmig übergriffen wird. Daher wird eine Verschiebung des Bauteils in Kettenlängsrichtung verhindert.

Gemäß einer zweckmäßigen, weiteren Ausbildung der Erfindung sind die Rastmittel durch formschlüssig in die Rastausnehmungen einsetzbare, nach außen weisende Haken gebildet, die an ihren Enden Rastvorsprünge aufweisen.

Eine zweckmäßige, weitere Ausbildung der Erfindung sieht vor, dass die Überbrückungsmittel durch von den Enden der Rahmenschenkel ausgehende Schenkelquerstreifen und durch vom freien Ende des Trennstegs ausgehende Trennstegquerstreifen gebildet sind und dass jeder Schenkelquerstreifen mit dem ihm zugeordneten Trennstegquerstreifen einen zur Einfügung von Energieleitungen ausreichenden Spalt bildet, der schräg zur Längsrichtung des Kettenglieds verläuft.

Gemäß einer weiteren Ausbildung der Erfindung ist mindestens ein am Rahmen bzw. am Trennsteg bzw. an beiden festlegbarer Zwischenquersteg vorgesehen, der zur Einführung von der Seite der Überbrückungsmittel her mit an diese angepassten Ausnehmungen versehen ist. Daher ist auf einfache Weise die Bildung von Kammern im Kettenglied möglich.

Gemäß einer vorteilhaften, weiteren Ausbildung der Erfindung erfolgt die Festle gung des Zwischenquerstegs durch an den Rahmenschenkeln bzw. dem Trennsteg angeordnete oder am Zwischenquersteg angeordnete Rastmittel.

Bei kleineren Energieführungsketten ist es zweckmäßig, wenn nach einer weiteren Ausbildung der Erfindung der untere Quersteg einstückig mit den Seitenlaschen verbunden ist. Die Stabilität des Kettenglieds wird dadurch erhöht.

Gemäß einer weiteren Ausbildung der Erfindung besteht das Bauteil aus begrenzt flexiblem Kunststoff. Dünnere Energieführungsleitungen können somit auch unter Verbiegen der Querstreifen in das Kettenglied eingelegt oder ausgetauscht werden.

Die Erfindung wird nun anhand von Ausführungsbeispielen näher erläutert. Es zeigen:
- Fig. 1: eine Stirnansicht eines Kettenglieds und ein Schnitt durch das Bauteil,
- Fig. 2: einen Schnitt durch das getrennt dargestellte Bauteil der Fig. 1 und
- Fig. 3: eine Seitenansicht des Bauteils der Fig. 2.
- Fig. 4: einen Schnitt durch ein Kettenglied mit einem alternativen Bauteil gemäß der Erfindung,
- Fig. 5: eine Draufsicht auf das Bauteil der Fig. 4,
- Fig. 6: eine Seitenansicht des Bauteils der Fig. 4,
- Fig. 7: eine Draufsicht auf eine am Bauteil der Figuren 4 und 5 einsetzbaren Zwischenquersteg,
- Fig. 8: eine vergrößerte, perspektische Ansicht eines weiteren Kettenglieds mit einem Zwischenquersteg,
- Fig. 9: eine Draufsicht des Kettengliedes nach Fig. 8 und
- Fig. 10: den Körper nach Fig. 8 in perspektivischer Ansicht.

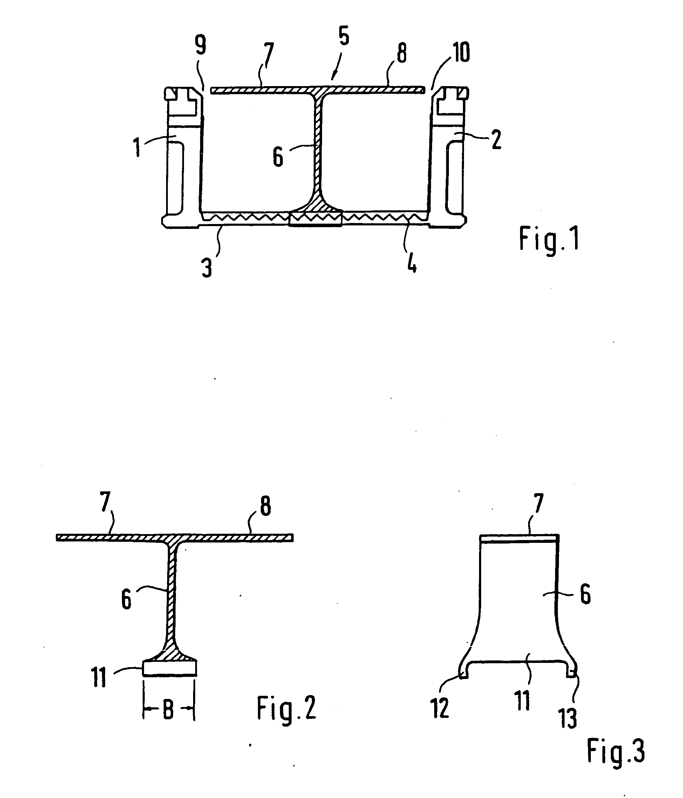

Das in Fig. 1 dargestellte Kettenglied einer Energieführungskette aus Kunststoff besteht aus zwei Seitenlaschen 1, 2, die in nicht dargestellter Weise im Bereich ihrer Enden mit benachbarten Kettengliedern gelenkig verbunden sind. Die Seitenlaschen 1, 2 sind mittels eines unteren Querstegs 3 einstückig und materialeinheitlich miteinander verbunden. Sie werden im Zuge des Spritzgießverfahrens als eine einstückige Einheit hergestellt. Der Quersteg 3 hat einen im Wesentlichen rechteckigen Querschnitt und ist auf seiner dem Inneren des Kettenglieds zugewandten Seite mit einer Zahnung 4 versehen.

Auf den unteren Quersteg 3 ist ein Bauteil 5 aufrastbar, das einstückig und materialeinheitlich aus einem Trennsteg und zwei querstegartigen Querstreifen 7, 8 gebildet ist. Diese Querstreifen reichen nahe an die Seitenlaschen 1, 2 heran, wobei die dabei gebildeten Spalte 9, 10 zwischen den Seitenlaschen 1, 2 und den Querstreifen 7, 8 derart gewählt sind, dass die eingelegten ,Energieleitungen nicht durchfallen.

Der Trennsteg 6 ist nach den Figuren 2, 3 mit einem Fuß 11 versehen, der in Kettengliedquerrichtung wesentlich breiter (B) als die Stärke des Trennstegs und mit zwei die Kanten des unteren Querstegs 3 umklammernden Klammerleisten 12, 13 versehen ist. Der Fuß 11 ist mit einer in den Figuren nicht sichtbaren, in die Zahnung 4 passenden Gegenzahnung versehen.

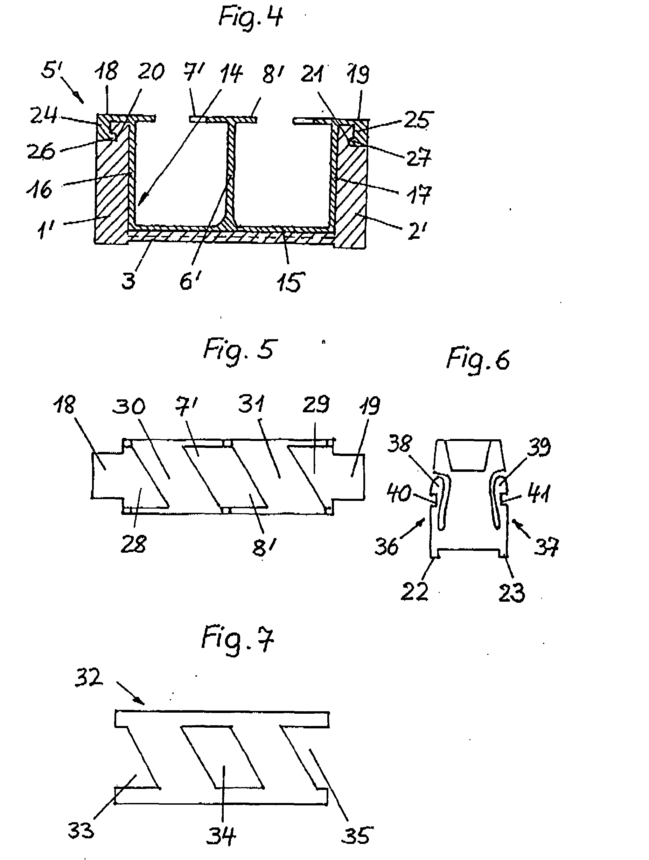

Das in Fig. 4 dargestellte Kettenglied einer Energieführungskette aus Kunststoff besteht aus zwei Seitenlaschen 1', 2', die in nicht dargestellter Weise im Bereich ihrer Enden mit benachbarten Kettengliedern gelenkig verbunden sind. Die Seitenlaschen 1 ', 2' sind mittels eines unteren Querstegs 3 einstückig miteinander verbunden.

Auf den unteren Quersteg 3 ist ein Bauteil 5' aufrastbar, das einstückig aus einem Trennsteg 6' mit zwei querstegartigen Trennstegquerstreifen 7', 8 ' und aus einem U-förmigen Rahmen 14 gebildet ist. Der Rahmen 14 hat eine auf dem unteren Quersteg 3 aufliegende Basis 15 und zwei daran anschließende, an den Seitenlaschen 1', 2' anliegende Rahmenschenkel 16, 17. Die freien Enden der Rahmenschenkel 16, 17 tragen Rastmittel 18, 19, die in in der Nähe der oberen Längsseitenkanten der Seitenlaschen 1', 2' angeordnete Rastausnehmungen 20, 21 einrasten.

An den Längskanten der Basis 15 sind Längsstege 22, 23 derart angeordnet sind, dass der untere Quersteg 3 U-förmig übergriffen wird.

Die Rastmittel 18, 19 sind durch formschlüssig in die Rastausnehmungen 20, 21 einsetzbare, nach außen weisende Haken 24, 25 gebildet, die an ihren Enden Rastvorsprünge 26, 27 aufweisen.

Von den Enden der Rahmenschenkel 16, 17 gehen Schenkelquerstreifen 28, 29, und vom freien Ende des Trennstegs 6' gehen die Trennstegquerstreifen 7', 8' aus. Jeder Schenkelquerstreifen 28, 29 bildet mit dem ihm zugeordneten Trennstegquerstreifen 7', 8' einen zur Einfügung von Energieleitungen ausreichenden Spalt 30, 31, der schräg zur Längsrichtung des Kettenglieds verläuft, wie aus Fig. 5 entnehmbar ist.

In das Bauteil 5' kann zur Kammerbildung mindestens ein am Rahmen 14 und am Trennsteg 6' festlegbarer, plattenförmiger Zwischenquersteg 32 vorgesehen sein, der zur Einführung von der Seite der Überbrückungsmittel her mit an die Trennstegquerstreifen 7', 8' und an die Schenkelquerstreifen 28, 29 angepassten Ausnehmungen 33-35 versehen ist.

Zum Zweck der Festlegung des Zwischenstegs 32 hat jeder Rahmenschenkel 16 bzw. 17 oder auch der Trennsteg 6'Rastmittel 36, 37, die jeweils aus einer gestanzten, seitlichen Feder 38 bzw. 39 mit einer Rastausnehmung 40 bzw. 41 gebildet sind. Die Längskanten des Zwischenquerstegs werden in diesen Rastausnehmungen 40, 41 aufgenommen.

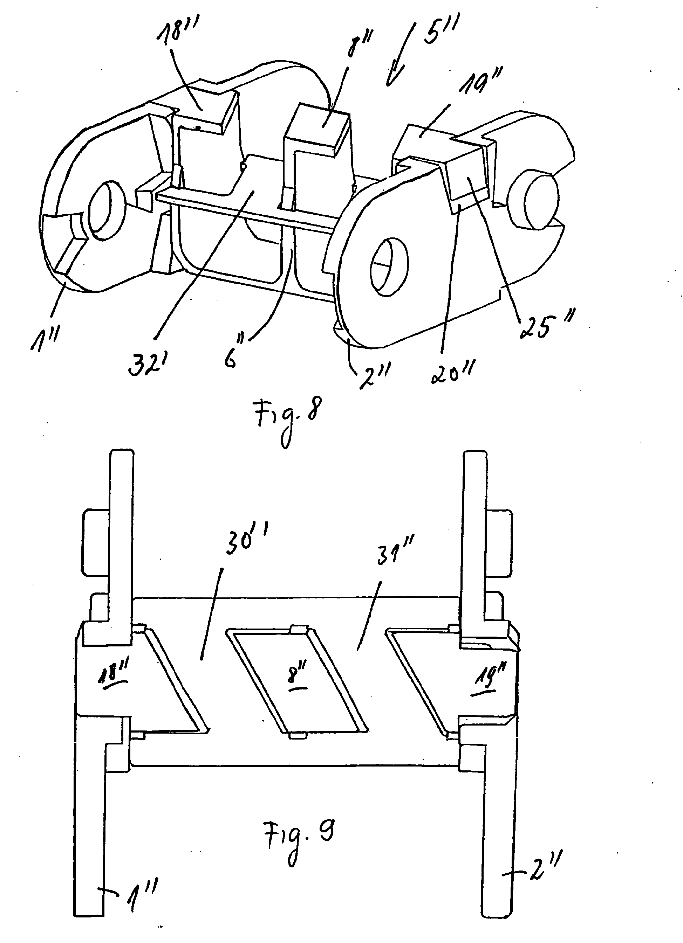

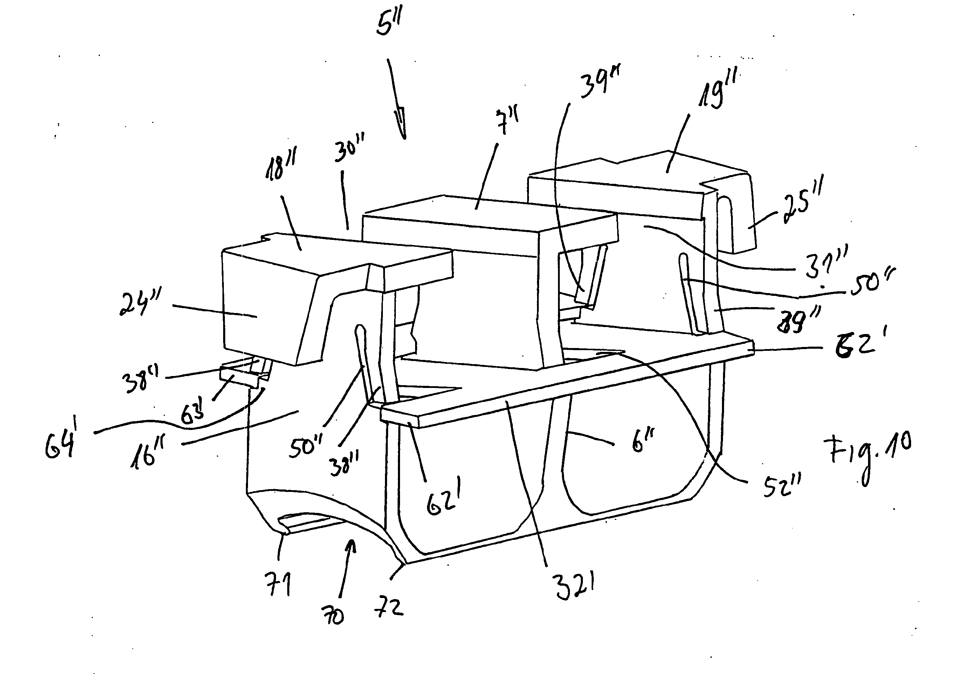

Figuren 8 und 9 zeigen ein Kettenglied bzw. ein Bauteil. Die beiden Seitenlaschen 1 ", 2" sind im vorliegenden Falle mit dem nicht dargestellten unteren Querschnitt einstückig und materialeinheitlich ausgebildet. Im oberen Bereich der Seitenlaschen 1" und 2" und an deren Aussenseiten sind Rastausnehmungen 20" für Rastmittel 18", 19" des als Regal ausgebildeten Bauteils 5" vorgesehen. Wie Figuren 9 und 10 zu entnehmen ist, besteht das Regal 5" aus einem Grundkörper mit zwei Rahmenschenkeln 16", 17" und einem Trennsteg 6" mit einem trapezartigen und deckseitig angeordneten Trennstegstreifen 7" der zusammen mit den Rastmitteln 18", 19" Spalte 30", 31" für die Kabel definiert. Etwa im mittleren Bereich der Rahmenschenkel 16", 17" sind Einschnitte 50" vorgesehen die elastisch verschwingbaren Federn 38", 39" definieren. Der Zwischenquersteg 32' besitzt eine Ausnehmung 52", die so gewählt ist, dass der Trennstegquerstreifen 7" durch die Öffnung passt. Der Zwischenquersteg 32' wird auf das Bauteil 5" von oben gesetzt und etwa in der mitte, unterhalb der Federn 38", 39" positioniert. Beim Einführen des Zwischenstückes 32' werden die Federn 38", 39" durch die Schenkel 62', 63' aufeinander zu gedrückt, bis sich die Schenkel 62', 63' auf der Stufe 64' abstützen. Die Federn 38", 39" halten das Zwischenstück 32 fest. Im Bodenbereich des Bauteils 5" ist eine linksgerichtete Ausnehmung 70 mit Nasen 71, 72 ausgebildet, die auf den Quersteg des Kettenglides aufrastbar ist.

## Patentansprüche

1. Kettenglied für eine Energieführungskette aus Kunststoff mit zwei gegenüberliegenden Seitenlaschen (1, 2, 1', 2'), einem die beiden Seitenlaschen (1, 2, 1', 2') miteinander verbindenden Quersteg (3), Überbrückungsmitteln (7, 8, 7', 8') zur Überbrückung der dem unteren Quersteg (3) gegenüberliegenden Öffnung des Kettenglieds und mit mindestens einem am unteren Quersteg (3) befestigbaren Trennsteg (6, 6'), **dadurch gekennzeichnet, dass** der Trennsteg (6, 6') und die Überbrückungsmittel (7, 8, 7', 8') ein einstückiges, materialeinheitliches Bauteil (5, 5', 5") bilden, und dass das Bauteil (5') durch einen mit dem Fuß des Trennstegs (6') einstückig verbundenen, U-förmigen Rahmen (14) gebildet ist, dessen Basis (15) auf dem unteren Quersteg (3) aufliegt und dessen Rahmenschenkel (16, 17) an den Seitenlaschen (1', 2') anliegen, und dass die freien Enden der Rahmenschenkel (16, 17) Rastmittel (18, 19) tragen, die in der Nähe der oberen Längsseitenkanten der Seitenlaschen (1', 2') angeordneten Rastausnehmungen (20, 21) einrasten.

2. Kettenglied nach Anspruch 1, **dadurch gekennzeichnet, dass** an den Längskanten der Basis (15) Längsstege (22, 23) derart angeordnet sind, dass der untere Quersteg (3) U-förmig übergrifffen wird.

3. Kettenglied nach Anspruch 1 oder 2, **dadurch gekennzeichnet, dass** die Rastmittel durch formschlüssig in die Rastausnehmungen (20, 21) einsetzbare, nach außen weisende Haken (24, 25) gebildet sind, die an ihren Enden Rastvorsprünge (26, 27) aufweisen.

4. Kettenglied nach einem der Ansprüche 1 bis 3, **dadurch gekennzeichnet, dass** die Überbrückungsmittel durch von den Enden der Rahmenschenkel (16, 17) ausgehende Schenkelquerstreifen (28, 29) und durch vom freien Ende des Trennstegs (6') ausgehende Trennstegquerstreifen (7', 8') gebildet sind, und dass jeder Schenkelquerstreifen (28, 29) mit dem ihm zugeordneten Trennstegquerstreifen (7', 8') einen zur Einfügung von Energieleitungen ausreichenden Spalt (30, 31) bildet, der schräg zur Längsrichtung des Kettenglieds verläuft.

5. Kettenglied nach Anspruch 4, **dadurch gekennzeichnet, dass** mindestens ein am Rahmen (14) bzw. am Trennsteg (6') bzw. an beiden festleggbarer Zwischenquersteg (32) vorgesehen ist, der zur Einführung von der Seite der Überbrückungsmittel her mit an diese angepassten Ausnehmungen versehen ist.

6. Kettenglied nach Anspruch 5, **dadurch gekennzeichnet, dass** die Festlegung des Zwischenquerstegs (32) durch an den Rahmenschenkeln (16, 17) bzw. dem Trennsteg (6') angeordnete oder am Zwischenquersteg (32) angeordnete Rastmittel (36, 37) erfolgt.

7. Kettenglied nach einem der vorhergehenden Ansprüche, **dadurch gekennzeichnet, dass** der untere Quersteg (3) einstückig mit den Seitenlaschen (1, 2, 1', 2') verbunden ist.

8. Kettenglied nach einem der Ansprüche 1 bis 7, **dadurch gekennzeichnet, dass** das Bauteil (5, 5', 5") aus einem derart begrenzt flexiblen Kunststoff besteht, dass dünnere Energieführungsleitungen auch unter Verbiegen der Querstreifen (7, 8, 7', 8') durch die verbleibende Spalte (9, 10) zwischen den Seitenlaschen (1, 2, 1', 2') und den Quersteifen (7, 8, 7', 8') in das Kettenglied einleg-, oder entnehmbar sind.

## Claims

1. A chain link for an energy supply chain of plastic, having two opposed lateral tabs (1, 2, 1', 2), a crosswise rib (3) joining the two lateral tabs (1, 2, 1', 2) together, bridging means (7, 8, 7', 8) for bridging the opening in the chain link opposite the lower crosswise rib (3), and having at least one separation rib (6, 6') that can be secured to the lower crosswise rib (3), **characterized in that** the separation rib (6, 6') and the bridging means (7, 8, 7', 8) are a one-piece component (5, 5', 5") of uniform material; and that the component (5') is formed by a U-shaped frame (14) joined in one piece to the base of the separation rib (6'), the base (15) of which frame rests on the lower crosswise rib (3) and the frame legs (16, 17) of which frame rest on the lateral tabs (1', 2'); and that the free ends of the frame legs (16, 17) carry detent means (18, 19) that latch into detent recesses (20, 21) disposed in the vicinity of the upper longitudinal side edges of the lateral tabs (1', 2').

2. The chain link as defined by claim 1, **characterized in that** longitudinal ribs (22, 23) are disposed on the long edges of the base (15) in such a way that the lower crosswise rib (3) is clasped in U-shaped fashion.

3. The chain link as defined by claim 1 or 2, **characterized in that** the detent means are formed by outward-pointing hooks (24, 25), which are insertable in form-locking fashion into the detent recesses (20, 21) and which on their ends have pawls (26, 27).

4. The chain link as defined by one of claims 1 through 3, **characterized in that** the bridging means are formed by crosswise leg strips (28, 29) originating at the ends of the frame legs (16, 17) and by crosswise separation rib strips (7', 8') originating at the free end of the separation rib (6'); and that each crosswise leg strip (28, 29), with the crosswise separation rib strip (7', 8') associated with it, forms a gap (30, 31) sufficient for the insertion of energy lines and extends obliquely to the longitudinal direction of the chain link.

5. The chain link as defined by claim 4, **characterized in that** at least one intermediate crosswise rib (32) is provided, which is fixable to the frame (14) or the separation rib (6') or both and which for introduction from the side of the bridging means is provided with recesses that are adapted to the bridging means.

6. The chain link as defined by claim 5, **characterized in that** the fixation of the intermediate crosswise rib (32) is effected by means of detent means (36, 37) disposed on the frame legs (16, 17) or on the separation rib (6') or on the intermediate crosswise rib (32).

7. The chain link as defined by one of the foregoing claims, **characterized in that** the lower crosswise rib (3) is connected in one piece to the lateral tabs (1, 2, 1', 2).

8. The chain link as defined by one of claims 1 through 7, **characterized in that** the component (5, 5', 5") comprises a plastic that is limitedly flexible in such a way that thinner energy supply lines can be inserted into or removed from the chain link, through the remaining gap (9, 10) between the lateral tabs (1, 2, 1', 2) and the crosswise strips (7,8,7',8), even if the crosswise strips (7, 8, 7', 8) become bent.

## Revendications

1. Maillon de chaîne pour une chaîne porte-câbles en matière plastique, avec deux éclisses latérales opposées (1, 2, 1', 2'), avec une entretoise (3) reliant entre elles les deux éclisses latérales (1, 2, 1', 2'), avec des moyens formant pont (7, 8, 7', 8') pour surmonter l'ouverture du maillon de chaîne qui est opposée à l'entretoise inférieure (3), et avec au moins une nervure séparatrice (6, 6') pouvant être fixée sur l'entretoise inférieure (3), **caractérisé en ce que** la nervure séparatrice (6, 6') et les moyens formant pont (7, 8, 7', 8') forment une pièce (5, 5', 5") d'un seul tenant en un même matériau, et **en ce que** la pièce (5') est formée par un cadre en U (14) relié d'un seul tenant au pied de la nervure séparatrice (6'), cadre dont la base (15) repose sur l'entretoise inférieure (3) et dont les branches de cadre (16, 17) s'appliquent contre les éclisses latérales (1', 2'), et **en ce que** les extrémités libres des branches de cadre (16, 17) portent des moyens d'enclenchement (18, 19), qui s'enclenchent dans des évidements d'enclenchement (20, 21) disposés au voisinages des bords latéraux longitudinaux des éclisses latérales (1', 2').

2. Maillon de chaîne selon la revendication 1, **caractérisé en ce que** des nervures longitudinales (22, 23) sont disposées sur les bords longitudinaux de la base (15) de telle sorte que l'entretoise inférieure (3) est engagée en recouvrement en forme de U.

3. Maillon de chaîne selon la revendication 1 ou 2, **caractérisé en ce que** les moyens d'enclenchement sont formés par des crochets (24, 25) dirigés vers l'extérieur et pouvant être introduits dans les évidements d'enclenchement (20, 21), crochets qui présentent à leurs extrémités des saillies d'enclenchement (26, 27).

4. Maillon de chaîne selon l'une des revendications 1 à 3, **caractérisé en ce que** les moyens formant pont sont formés par des bandes transversales de branches (28, 29) partant des extrémités des branches de cadre (16, 17) et par des bandes transversales de nervure séparatrice (7', 8') partant de l'extrémité libre de la nervure séparatrice (6'), et **en ce que** chaque bande transversale de branche (28, 29) forme, avec la bande transversale de nervure séparatrice (7', 8') qui lui est associée, une fente (30, 31) suffisante pour l'insertion de câbles de transport d'énergie, fente qui s'étend en oblique par rapport à la direction longitudinale du maillon de chaîne.

5. Maillon de chaîne selon la revendication 4, **caractérisé en ce qu'**il est prévu au moins une entretoise intermédiaire (32) pouvant être fixée en position sur le cadre (14) ou sur la nervure séparatrice (6') ou sur les deux, entretoise qui est pourvue, pour l'introduction depuis le côté des moyens formant pont, d'évidements adaptés à ces derniers.

6. Maillon de chaîne selon la revendication 5, **caractérisé en ce que** la fixation en position de l'entretoise intermédiaire (32) s'effectue par des moyens d'enclenchement (36, 37) disposés sur les branches de cadres (16, 17) et/ou sur la nervure séparatrice (6'), ou disposés sur l'entretoise intermédiaire (32).

7. Maillon de chaîne selon l'une des revendications précédentes, **caractérisé en ce que** l'entretoise inférieure (3) est reliée d'un seul tenant aux éclisses latérales (1, 2, 1', 2').

8. Maillon de chaîne selon l'une des revendications 1 à 7, **caractérisé en ce que** la pièce (5, 5', 5") est constituée d'une matière plastique d'une flexibilité limitée de telle sorte que des câbles de transport d'énergie très minces peuvent être eux aussi insérés ou retirés par les fentes restantes (9,10) entre les éclisses latérales (1, 2, 1', 2') et les bandes transversales (7, 8, 7', 8'), avec déformation des bandes transversales (7, 8, 7', 8').
